# EUROPEAN PATENT SPECIFICATION

(11) **EP 3 131 287 B1**
(45) Date of publication and mention of the grant of the patent: **24.07.2019**
(21) Application number: 14889174.0
(22) Date of filing: 15.12.2014
(51) Int. Cl.: H04N 5/655, H04N 5/64, F16M 13/02

(54) **TELEVISION**
FERNSEHEN
TÉLÉVISION

(30) Priority: 08.04.2014 CN 201420167328 U
(43) Date of publication of application: 15.02.2017
(73) Proprietor: SHENZHEN TCL NEW TECHNOLOGY CO., LTD, Nanshan District Shenzhen, Guangdong 518052 (CN)
(72) Inventor: WEN, Dong, Shenzhen, Guangdong 518052 (CN); LI, Jianqiang, Shenzhen, Guangdong 518052 (CN); YU, Chunhua, Shenzhen, Guangdong 518052 (CN); YU, Bo, Shenzhen, Guangdong 518052 (CN)
(74) Representative: Kuhnen & Wacker Patent- und Rechtsanwaltsbüro PartG mbB
(86) International application number: PCT/CN2014/093804
(87) International publication number: WO 2015/154509

(56) References cited:
- EP-A2- 2 541 933
- WO-A2-2009/012379
- CN-A- 102 693 681
- CN-U- 201 608 810
- CN-U- 201 698 660
- CN-U- 202 308 966
- CN-U- 203 859 818
- CN-Y- 201 174 486
- CN-Y- 201 354 920
- US-A1- 2009 039 212
- US-B1- 8 658 895

## Description

### BACKGROUND

### Technical Field

The present invention relates to a television, comprising a television main body having a plurality of signal terminals and being used for displaying audio and video information and a plurality of connection pillars for fixedly mounting the television main body on a wall.

### Related Art

Such a television is known from EP 2 541 933 A2.

Currently, most families select a wall mounting manner to mount a large-sized liquid crystal television; in this way, the television is aesthetic, and the using space can be saved. However, after a traditional television is mounted on a wall, wiring is messy and exposed to the outside. In this way, the appearance of the television is influenced, and the exposed wiring is easily damaged to cause an electric shock.

The television of EP 2 541 933 A2 comprises a screen, a housing and a single front connector for receiving the energy and the communication signals through a single rear connector. The front connector protrudes outward with respect to the rear side of the housing of the monitor. To mount the television to the wall support plate comprises an angular flange wherein an anchoring screw is coupled that threads in turn in a part of the housing of the monitor, in correspondence with a groove of the housing where the angular flange is housed.

CN 102 693 681 A discloses a television comprising a shell, a display panel and a first power interface which are installed on the shell, and a circuit board which is arranged inside the shell and is provided with a plurality of first signal input and output interfaces.

The television of WO 2009/012379 A2 includes a wall interface assembly, a pair of arm assemblies, and a mounting assembly. The arm assemblies may be substantially hollow arms having removable covers for storing wires connected to display therein.

### SUMMARY

The present invention provides a television, which enables the television to be mounted on a wall in a tidy manner, and better protects wiring of the television.

In order to achieve the foregoing objective, the present invention provides the features of claim 1.

Further improvements are subject to the dependent claims.

### BRIEF DESCRIPTION OF THE DRAWINGS

FIG. 1 is a front view of a mounting state of a television according to the present invention;
FIG. 2 is a left view of a mounting state of a television according to the present invention;
FIG. 3 is a rear view of the television in FIG. 1; and
FIG. 4 is a left view of the television in FIG. 1.

### DETAILED DESCRIPTION

It should be understood that specific embodiments described herein are only used for explaining the present invention rather than limiting the present invention.

The present invention provides a television.

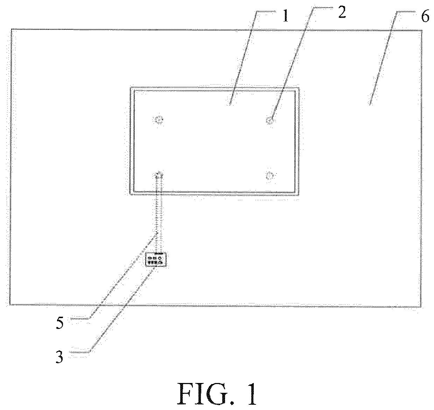

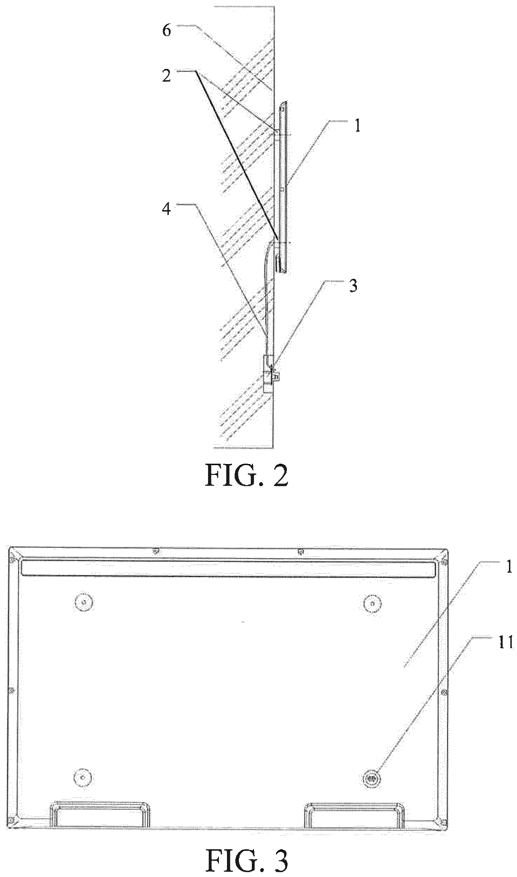

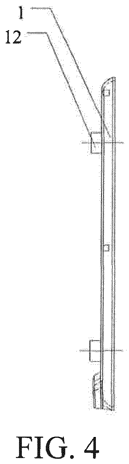

With reference to FIG.1 to FIG. 4, FIG. 1 is a front view of a mounting state of a television according to the present invention; FIG. 2 is a left view of a mounting state of a television according to the present invention; FIG. 3 is a rear view of the television in FIG. 1; and FIG. 4 is a left view of the television in FIG. 1. The television provided in the embodiments includes a television main body 1 and connection pillars 2.

The television main body 1 is used for displaying audio and video information. The television main body 1 has a plurality of signal terminals 11. The signal terminals 11 may be arranged at different positions according to the motherboard of the television main body 1. The signal terminals 11 are generally arranged at the position at a lower right corner on a back surface of the television main body 1. It should be noted that the signal terminals 11 include signal terminals such as a power source input port, an HDMI interface, an RF45 interface, an RF terminal, and an AV input terminal. The television main body 1 is powered by a power source input end, and the television main body 1 implements audio/video information interaction with an external device (such as a DVD player) through an HDMI terminal. Similarly, the RF terminal and the AV input terminal have the same function and effect.

The connection pillars 2 are used for fixing the television main body 1 to a wall 6. It should be noted that the connection pillars 2 may be set to a plurality as long as the connection pillars 2 can fix the television main body to the wall 6. In this embodiment, the connection pillars 2 are set to four. The four connection pillars 2 are independent and separate and are arranged in two rows and two columns; one end of the connection pillars 2 is fixed to the wall 6 in a fixing manner such as bolt fixing, and the other end is connected to the television main body 1, so that the television main body 1 is fixed to the wall 6. At least one of the connection pillars 2 has a through hole penetrating through the connection pillar in an axial direction of the connection pillar (not shown in the figure). The through hole is in communication with a cable channel in the wall 6, and during mounting, the through hole preferably corresponds to the position of the signal terminals 11 of the television main body 1.

During assembly, the connection pillars 2 are mounted on the wall 6 through a bolt, and the connection pillar 2 having the through hole is in communication with the cable channel pre-embedded in the wall 6. After the connection pillars 2 are mounted on the wall 6, signal lines of the signal terminals 11 of the television main body 1 pass through the through hole of the connection pillar 2, are inserted into the cable channel in the wall 6, and extend from the other outlet of the cable channel, and then the television main body 1 is fixedly connected to the connection pillars 2. It should be noted that there are a plurality of manners for connecting the television main body 1 and the connection pillars 2. In this embodiment, one surface close to the wall 6 of the television main body 1 is a back surface. Connection sleeves are arranged at the positions corresponding to the connection pillars 2 on the back surface of the television main body 1, and the inner diameter of the connection sleeves is slightly greater than the outer diameter of the connection pillars 2. During mounting, the connection sleeves of the television main body 1 are sleeved on the corresponding connection pillars 2. Preferably, the connection sleeves and the connection pillars 2 have interference fit, so that the television main body 1 is firmly fixed to the wall 6. A power line is connected to an external power source through the outlet of the cable channel, and other signals are connected to the external device through the outlet of the cable channel.

In the present invention, at least one connection pillar 2 having a through hole is arranged at a position on a wall 6, the through hole of the connection pillar 2 is in communication with a cable channel in the wall 6, and signal lines connected to signal terminals 11 of a television main body 1 can pass through the through hole of the connection pillar 2 to the cable channel in the wall 6 and are connected to an external device at another outlet of the cable channel. After a television provided in the present invention is mounted on the wall 6, wiring is hidden in the wall 6, so that the television main body 1 is hung on the wall 6 like a picture frame. In this way, the television is enabled to be aesthetic, tidy, and elegant on the whole, and a damage probability of insulating material of the wiring is lowered, thereby improving an electric safety performance of the television.

Furthermore, the television further includes a television terminal box 3 having a plurality of signal interfaces and capable of connecting to the external device through the signal interfaces and connection lines 4 for connecting the television terminal box 3 and the television main body 1. One end of the connection lines 4 is connected to the television terminal box 3, and the other end of the connection lines 4 passes through the interior of the wall 6 and the through hole of the connection pillar 2 to be electrically connected to the signal terminals 11 of the television main body 1.

The television terminal box 3 has multimedia interfaces such as a power source input port (a 220V power source input port), an HDMI interface, an RJ45 interface, an RF terminal, and an AV input terminal. The power source input port of the television terminal box 3 is connected to an external power source receptacle through a power line, realizing power-on operation of the television. The television can be connected to an external multimedia device through a multimedia interface, realizing information interaction between the television and the multimedia device. It should be noted that a television in the prior art does not have the television terminal box 3, and an external device is directly connected to the signal terminals 11 of the television main body 1. When the television needs to connect the external device, a user connects one end of the connection lines 4 to the signal terminals of the external device and connects the other end of the connection lines 4 to the signal terminals 11 of the television main body 1. The signal terminals 11 of the television main body 1 are generally arranged on the back surface (one surface close to the wall 6) of the television main body 1. When the external device needs to be disconnected from the television, the user needs to unplug the connection lines 4 from the signal terminals 11 of the television main body 1. A person skilled in the art should know that after a television is hung on a wall, plugging and unplugging of signal lines on a back surface of the television is limited by operation space, thereby causing inconvenience for user operation. However, in the present invention, the television terminal box 3 is added, and the television terminal box 3 and the television main body 1 are arranged separately, which overcomes a problem of limiting plugging and unplugging of signal lines by the operation space. When the television needs to perform signal interaction with the external device, the television may be connected to the external device through the television terminal box 3. The television terminal box 3 is further connected to the television main body 1 through the connection lines 4, thereby realizing information interaction between the external device and the television main body 1.

The connection lines 4 are cables; one end of the cables is connected to the signal terminals 11 of the television main body 1, and the other end of the cables is connected to the television terminal box 3. A signal of the television main body 1 is transmitted to the television terminal box 3 through the cables so as to be transmitted to the external device through the television terminal box 3. The television terminal box 3 may also receive a signal transmitted from the external device and transmit the signal to the television main body 1 through the cables. For example, the television terminal box 3 is connected to the external power source through an electric wire, the external power source inputs a current to the television terminal box 3, and the television terminal box 3 inputs the current to the television main body 1 through the cables to supply power to the television main body 1.

In the present invention, a television terminal box 3 is added in the television, the television terminal box 3 and a television main body 1 of the television are arranged separately, and the television terminal box 3 is connected to the television main body 1 via connection lines 4. The television is connected to an external device via the television terminal box 3. When a user needs to connect the television main body 1 to the external device, the external device is connected to a signal port corresponding to the television terminal box 3 through the connection lines 4. The television terminal box 3 and the television main body 1 are arranged separately and the operation space is not limited in the process of plugging or unplugging a line, so that operations are very convenient.

Furthermore, in order to further protect insulating material of the wring from damage, the television further includes a cable conduit 5 for accommodating the connection lines 4, where the cable conduit 5 is arranged in the wall 6.

Furthermore, the television terminal box 3 is fixedly mounted on the wall 6. The television terminal box 3 is fixed to the wall 6 in a connection manner such as bolt connection. The user only needs to connect the external device to a corresponding interface of the television terminal box 3 to realize connection between the external device and the television main body 1. This design enables the television to be tidy and elegant and further facilitates operation of plugging a line and unplugging a line of the television.

Furthermore, the connection pillars 2 may be set to be cylinders or rectangular cylinders.

In the present embodiment, in order to further improve a whole aesthetic property of the television, the connection pillars 2 may be uniformly set to be cylinders, be uniformly set to be rectangular cylinders, or be partially set to be cylinders and partially set to be rectangular cylinders as long as side views of these connection pillars 2 are consistent, that is, a whole effect of the television is enabled to be more tidy, aesthetic, and elegant, thereby improving a client experience degree. It should be noted that the shape of the connection sleeves 12 on a back plate of the television main body 1 matches the shape of the corresponding connection pillars 2.

Furthermore, in order to facilitate mounting and maintenance of the television, the signal terminals 11 of the television main body 1 are provided with plugs, end portions, connected to the signal terminals 11 of the television main body 1, of the connection lines 4 are provided with receptacles; the plugs match jacks of the receptacles. When the television is mounted on the wall 6, the jacks of the receptacles of the connection lines 4 are first connected to the plugs of the signal terminals 11 of the television main body 1. The other end of the connection lines 4 then passes through the through hole of the connection pillar 2 and the cable channel of the wall 6 and then is connected to the television terminal box 3, realizing mounting of the television. In another variant embodiment, the signal terminals 11 of the television main body 1 may be also receptacles, end portions, connected to the signal terminals 11 of the television main body 1, of the connection lines 4 are set to be plugs; during assembly, the plugs and the receptacles are connected in a matching manner. This has the same principle and beneficial effect as the foregoing embodiment.

Furthermore, in order to better facilitate mounting and maintenance of the television, the television terminal box 3 is provided with receptacles, and one end, connected to the television terminal box 3, of the connection lines 4 is provided with plugs; the plugs match the receptacles. When the television is mounted on the wall 6, the connection lines 4 first pass through the cable channel of the wall 6, and then the plugs of the connection lines 4 are connected to the receptacles of the television terminal box 3; furthermore, the television terminal box 3 is fixed on the wall 6. In another variant embodiment, the television terminal box 3 may be also set to be a receptacle, end portions, connected to the television terminal box 3, of the connection lines 4 are set to be plugs; during assembly, the plugs and the receptacle are connected in a matching manner. This has the same principle and beneficial effect as the foregoing embodiment.

In other variant embodiments, the connection lines 4 may be signal lines directly connected to the signal terminals 11 of the television main body 1, that is, the signal terminals connecting the connection lines 4 and the television main body 1 do not need to be connected in a plug/receptacle manner.

The foregoing descriptions are merely preferred embodiments of the present invention but are not intended to limit the patent scope of the present invention. Any equivalent modifications made to the structures or processes based on the content of the specification and the accompanying drawings of the present invention for direct or indirect use in other relevant technical fields shall also be encompassed in the patent protection scope of the present invention.

## Claims

1. A television, comprising a television main body (1) having a plurality of signal terminals (11) and being used for displaying audio and video information and a plurality of independent and separate connection pillars (2) for fixedly mounting the television main body on a wall (6), **characterised in that** at least one of the connection pillars (2) is provided with a through hole for guiding a signal line connecting the signal terminals (11) into the wall (6), and the through hole penetrates through the connection pillar (2) in an axial direction of the connection pillar (2), wherein one surface close to the wall (6) of the television main body (1) is a back surface, and wherein connection sleeves (12) are provided at positions corresponding to the connection pillars (2) on the back surface of the television main body (1), and the connection sleeves (12) are sleeved on the corresponding connection pillars (2).

2. The television according to claim 1, further comprising a television terminal box (3) having a plurality of signal interfaces and capable of connecting an external device through the signal interfaces and connection lines (4) for connecting the television terminal box (3) to the signal terminals (11) of the television main body (1), wherein one end of the connection lines (4) is electrically connected to the television terminal box (3), and the other end of the connection lines (4) passes through the interior of the wall (6) and the through hole of the connection pillar (2) to be electrically connected to the signal terminals (11) of the television main body (1).

3. The television according to claim 2, further comprising a cable conduit for accommodating the connection lines (4), wherein the cable conduit is arranged in the wall (6).

4. The television according to claim 2 or 3, wherein the television terminal box (3) is fixedly mounted on the wall (6).

5. The television according to any one of claims 2 to 4, wherein the signal terminals (11) of the television main body (1) are provided with plugs/receptacles, and end portions, connected to the signal terminals (11) of the television main body (1), of the connection lines (4) are provided with receptacles/plugs; and the plugs match the receptacles.

6. The television according to any one of claims 2 to 5, wherein the connection lines (4) are signal lines directly connected to the signal terminals (11) of the television main body (1).

7. The television according to any one of claims 2 to 6, wherein the television terminal box (3) is provided with receptacles/plugs, and one end, connected to the television terminal box (3), of the connection lines (4) is provided with plugs/receptacles; and the plugs match the receptacles.

8. The television according to any one of claims 1 to 7, wherein the number of the connection pillars (2) is set to four, and the four connection pillars (2) are arranged in two rows and two columns.

9. The television according to any one of claims 1 to 8, wherein the signal terminals (11) comprise a power source input port, an HDMI interface, an RJ45 interface, an RF terminal, and an AV input terminal.

10. The television according to any one of claims 1 to 9, wherein the inner diameter of the connection sleeves (12) is greater than the outer diameter of the connection pillars (2).

11. The television according to any one of claims 1 or 10, wherein the connection sleeves (12) and the connection pillars (2) have interference fit.

## Patentansprüche

1. Fernseher, aufweisend einen Fernseh-Hauptkörper (1), der eine Mehrzahl von Signalanschlüssen (11) aufweist und der zum Anzeigen von Audio- und Videoinformationen verwendet wird, und der eine Mehrzahl von unabhängigen und separaten Verbindungspfeilern (2) zum festen Montieren des Fernseh-Hauptkörpers an eine Wand (6) aufweist, **dadurch gekennzeichnet, dass** zumindest einer von den Verbindungspfeilern (2) mit einem Durchgangsloch zum Führen einer die Signalanschlüsse (11) verbindenden Signalleitung in die Wand (6) versehen ist, und das Durchgangsloch den Verbindungspfeiler (2) in einer axialen Richtung des Verbindungspfeilers (2) durchdringt, wobei eine Oberfläche nahe der Wand (6) des Fernseh-Hauptkörpers (1) eine hintere Oberfläche ist, und wobei Verbindungshülsen (12) an Positionen angeordnet sind, die den Verbindungspfeilern (2) auf der hinteren Oberfläche des Fernseh-Hauptkörpers (1) entsprechen, angeordnet sind, und die Verbindungshülsen (12) auf den entsprechenden Verbindungspfeilem (2) aufgesteckt sind.

2. Fernseher nach Anspruch 1, ferner aufweisend einen Fernseh-Anschlusskasten (3) mit einer Mehrzahl von Signalschnittstellen, und der in der Lage ist, eine externe Vorrichtung durch die Signalschnittstellen zu verbinden, und Verbindungsleitungen (4) zum Verbinden des Fernseh-Anschlusskastens (3) mit den Signalanschlüssen (11) des Fernseh-Hauptkörpers (1), wobei ein Ende der Verbindungsleitungen (4) mit dem Fernseh-Anschlusskasten (3) elektrisch verbunden ist, und das andere Ende der Verbindungsleitungen (4) durch das Innere der Wand (6) und das Durchgangsloch des Verbindungspfeilers (2) bewegt wird, so dass es mit den Signalanschlüssen (11) des Fernseh-Hauptkörpers (1) elektrisch verbunden ist.

3. Fernseher nach Anspruch 2, ferner aufweisend einen Kabelkanal zum Aufnehmen der Verbindungsleitungen (4), wobei das Kabelkanal in der Wand (6) angeordnet ist.

4. Fernseher nach Anspruch 2 oder 3, wobei der Fernseh-Anschlusskasten (3) fest an der Wand (6) montiert ist.

5. Fernseher nach einem der Ansprüche 2 bis 4, wobei die Signalanschlüsse (11) des Fernseh-Hauptkörpers (1) mit Steckern/Steckerbuchsen ausgestattet sind, und Endabschnitte, die mit den Signalanschlüssen (11) des Fernseh-Hauptkörpers (1) verbunden sind, von den Verbindungsleitungen (4) mit Steckerbuchsen/Steckern ausgestattet sind; und die Stecker mit den Steckerbuchsen zusammenpassen.

6. Fernseher nach einem der Ansprüche 2 bis 5, wobei die Verbindungsleitungen (4) Signalleitungen sind, die mit den Signalanschlüssen (11) des Fernseh-Hauptkörpers (1) direkt verbunden sind.

7. Fernseher nach einem der Ansprüche 2 bis 6, wobei der Fernseh-Anschlusskasten (3) mit Steckerbuchsen/Steckern ausgestattet ist, und ein mit dem Fernseh-Anschlusskasten (3) verbundenes Ende von den Verbindungsleitungen (4) mit Steckern/Steckerbuchsen versehen ist; und die Stecker mit den Steckerbuchsen zusammenpassen.

8. Fernseher nach einem der Ansprüche 1 bis 7, wobei die Anzahl der Verbindungspfeiler (2) auf vier eingestellt ist, und die vier Verbindungspfeiler (2) in zwei Reihen und zwei Spalten angeordnet sind.

9. Fernseher nach einem der Ansprüche 1 bis 8, wobei die Signalanschlüsse (11) einen Leistungsquellen-Eingangsport, eine HDMI-Schnittstelle, eine RJ45-Schnittstelle, einen RF-Anschluss und einen AV-Eingangsanschluss aufweisen.

10. Fernseher nach einem der Ansprüche 1 bis 9, wobei der Innendurchmesser der Verbindungshülsen (12) größer ist als der Außendurchmesser der Verbindungspfeiler (2).

11. Fernseher nach einem der Ansprüche 1 oder 10, wobei die Verbindungshülsen (12) und die Verbindungspfeiler (2) eine Presspassung aufweisen.

## Revendications

1. Télévision, comprenant un corps principal de télévision (1) ayant une pluralité de bornes de signal (11) et étant utilisée pour afficher les informations audio et vidéo et une pluralité de piliers de connexion indépendants et séparés (2) pour monter à demeure le corps principal de télévision sur une paroi (6), **caractérisé en ce qu'**au moins l'un des piliers de connexion (2) est pourvu d'un trou traversant pour guider une ligne de signal connectant les bornes de signal (11) dans la paroi (6), et le trou traversant pénètre à travers le pilier de connexion (2) dans une direction axiale du pilier de connexion (2), dans laquelle une surface proche de la paroi (6) du corps principal de télévision (1) est une surface arrière, et dans laquelle des manchons de connexion (12) sont prévus à des positions correspondant aux piliers de connexion (2) sur la surface arrière du corps principal de télévision (1), et les manchons de connexion (12) sont manchonnés sur les piliers de connexion (2) correspondants.

2. Télévision selon la revendication 1, comprenant en outre une boîte à bornes de télévision (3) ayant une pluralité d'interfaces de signal et capable de se connecter à un dispositif externe par le biais des interfaces de signal et des lignes de connexion (4) pour connecter la boîte à bornes de télévision (3) aux bornes de signal (11) du corps principal de télévision (1), dans laquelle une extrémité des lignes de connexion (4) est connectée électriquement à la boîte à bornes de télévision (3), et l'autre extrémité des lignes de connexion (4) passe à travers l'intérieur de la paroi (6) et du trou traversant du pilier de connexion (2) à connecter électriquement aux bornes de signal (11) du corps principal de télévision (1).

3. Télévision selon la revendication 2, comprenant en outre un conduit de câble pour loger les lignes de connexion (4), dans laquelle le conduit de câble est agencé dans la paroi (6).

4. Télévision selon la revendication 2 ou 3, dans laquelle la boîte à bornes de télévision (3) est montée à demeure sur la paroi (6).

5. Télévision selon l'une quelconque des revendications 2 à 4, dans laquelle les bornes de signal (11) du corps principal de télévision (1) sont pourvues de fiches/réceptacles, et des portions d'extrémité, connectées aux bornes de signal (11) du corps principal de télévision (1), des lignes de connexion (4) sont pourvues de réceptacles/fiches ; et les fiches concordent avec les réceptacles.

6. Télévision selon l'une quelconque des revendications 2 à 5, dans laquelle les lignes de connexion (4) sont des lignes de signal connectées directement aux bornes de signal (11) du corps principal de télévision (1).

7. Télévision selon l'une quelconque des revendications 2 à 6, dans laquelle la boîte à bornes de télévision (3) est pourvue de réceptacles/fiches, et une extrémité, connectée à la boîte à bornes de télévision (3), des lignes de connexion (4) est pourvue de fiches/réceptacles ; et les fiches concordent avec les réceptacles.

8. Télévision selon l'une quelconque des revendications 1 à 7, dans laquelle le nombre des piliers de connexion (2) est fixé à quatre, et les quatre piliers de connexion (2) sont agencés en deux rangées et deux colonnes.

9. Télévision selon l'une quelconque des revendications 1 à 8, dans laquelle les bornes de signal (11) comprennent un port d'entrée de source d'alimentation, une interface HDMI, une interface RJ45, une borne RF, et une borne d'entrée AV.

10. Télévision selon l'une quelconque des revendications 1 à 9, dans laquelle le diamètre intérieur des manchons de connexion (12) est supérieur au diamètre extérieur des piliers de connexion (2).

11. Télévision selon l'une quelconque des revendications 1 ou 10, dans laquelle les manchons de connexion (12) et les piliers de connexion (2) ont un ajustement serré.
